**Europäisches Patentamt**

**European Patent Office**

**Office européen des brevets**

(11) Veröffentlichungsnummer: **0 258 539**
**A2**

(12) # EUROPÄISCHE PATENTANMELDUNG

(21) Anmeldenummer: **87107468.8**

(22) Anmeldetag: **22.05.87**

(51) Int. Cl.⁴: **B62D 33/04 , B60J 7/10**

(30) Priorität: **06.06.86 DE 3619133**

(43) Veröffentlichungstag der Anmeldung:
**09.03.88 Patentblatt 88/10**

(84) Benannte Vertragsstaaten:
**BE FR NL**

(71) Anmelder: **Müller, Bernd**
**Alsterdorfer Strasse 41**
**D-2000 Hamburg 60(DE)**

(72) Erfinder: **Müller, Bernd**
**Alsterdorfer Strasse 41**
**D-2000 Hamburg 60(DE)**

(74) Vertreter: **Fleck, Thomas, Dr.Dipl.-Chem. et al**
**Patentanwälte Raffay, Fleck & Partner**
**Postfach 32 32 17**
**D-2000 Hamburg 13(DE)**

(54) **Vorrichtung zum Auf- und Abrollen von LKW-Planen.**

(57) Die vorliegende Erfindung betrifft eine Vorrichtung zum Auf-und Abrollen von Planen.

Abdeckplanen von Lkw und ihren Anhängern werden üblicherweise manuell vom Fahrer auf das Dach hochgeworfen, wenn dieser an die Fracht gelangen will. Dieses ist nicht nur bei schlechtem Wetter besonders erschwerlich, sondern führt teilweise auch zu Beschädigungen durch Gabelstapler, wenn die Plane nur unvollständig hochgeworfen ist oder im Wind flattert. Die Unfallgefahr ist zudem sehr groß, da viele Lkw-Fahrer die hochgeworfene Plane mit den Einsteckbrettern des Fahrzeuges beschweren, die herabfallen können. Hier schafft die Erfindung Abhilfe, indem sie eine Vorrichtung zum Auf-und Abrollen von Planen zum Anheben bzw. Absenken von hinteren oder seitlichen Lkw-Kunststoffplanen vorsieht, die eine Breite im Bereich von 2 bis 15 m besitzen können.

Fig. 1

EP 0 258 539 A2

## Vorrichtung zum Auf-und Abrollen von LKW-Planen

Die Erfindung bezeiht sich auf eine Vorrichtung zum Auf-und Abrollen von Planen nach dem Oberbegriff des Hauptanspruchs.

Eine derartige Vorrichtung ist im Stand der Technik bei hochzuraffenden Faltgardinen bekannt. Zum weiteren Stand der Technik sei auf die Konstruktion von Lamellenmarkisen verwiesen. Diese sind jedoch allesamt insofern nachteilig, als daß sie nicht bei den mit Lkw-Planen größerer Breite auftretenden Problemen helfen können. Seit Jahrzehnten plagt sich nämlich der Lkw-Fahrer damit, die relativ schweren Natur-oder Kunststoffplanen nach oben auf das Dach hochzuwerfen, wenn er an das Wageninnere bei Be-und Entladung herangelangen will. Daß dieses besonders Zeit-und kraftraubend ist, dürfte bei schlechten Wind-und Wetterbedingungen einleuchten. Ein weiterer ungelöster, gravierender Nachteil ist darin zu sehen, daß unzureichend aus der Lade-und Entladeöffnung entfernte Planen durch Gabelstapler und dergl. beschädigt werden können. Weiter besteht eine nicht geringe Gefahr durch das Herabfallen der Plane durch die Metallteile der Plane (Augenverletzungen).

Im Stand der Technik ist ferner aus der DE-AS 27 33 165 eine Vorrichtung zur Abdeckung der hinter den Fahrgastsitzbänken angeordneten Ladefläche im Inneren kombinierter Personen-und Lieferwagen bekannt, bei der eine Abdeckplane über die Ladefläche gezogen wird, die auf eine Welle aufwickelbar ist. Hierzu wird eine an sich bekannte Dreh-und Feststellvorrichtung zum Aufwickeln der Abdeckplane verwendet.

Der vorliegenden Erfindung liegt deshalb die Aufgabe zugrunde, die eben geschilderten Nachteile zu beseitigen und -wenn möglich - eine automatische bzw. halbautomatische oder manuelle Vorrichtung zum Auf-und Abrollen zur Verfügung zu stellen, die den Lkw-Fahrer davon entbindet, die seitliche oder hintere Plane hochzuwerfen. Auch sollte eine derartige Vorrichtung einfach im Aufbau und in der Handhabung sein. Darüberhinaus wartungsfrei und gleichzeitig für die im Betrieb befindlichen Lkw leicht nachzurüsten sein.

Diese Aufgaben und Ziele werden durch die eingangs genannte Vorrichtung gelöst, die dadurch gekennzeichnet ist, daß zur Verwendung der Vorrichtung bei LKW-Planen jedes Seil eine an einem äußeren Planenrohr montierte Führungsrolle und eine an einem darüberliegenden Planenrohr montierte erste Umlenkrolle mit Seilsicherung aufweist, die die Seile gemeinsam einer an der Stirnwand des Fahrzeugs befestigten zweiten Umlenkrolle zuführen, daß eine gemeinsame Aufwickelvorrichtung für die Seile vorgesehen ist.

Vorteilhafte Weiterbildungen des Erfindungsgedankens sind den Unteransprüchen zu entnehmen.

Die erfindungsgemäß ausgebildete Vorrichtung ermöglicht es also, die relativ langen Seitenplanen und auch die etwas kürzeren hinteren Planen eines LKWs stabil zu halten und sie gleichmäßig auf-und abzurollen, wobei zwei, drei, vier oder mehr Seile bzw. Leinen, die auch aus Kunststoff bestehen können, je nach Länge und Breite der Plane an einem äußeren Planenrohr befestigt und unter der Plane lose hindurchgeführt werden. Die Seile werden durch die Stabilisierungsstange gestrafft.Die Seile laufen dann vor der Plane über Führungs-und Umlenkrollen nach oben und anschließend gemeinsam nach vorn bis hin zur Aufwickelvorrichtung, die ggf. an der Stirnwand des Fahrzeugs befestigt sein kann. Im einfachsten Fall werden die Seile manuell gezogen und an einer Klampe arretiert.

Ein Ausführungsbeispiel der Erfindung wird nachfolgend an Hand der Zeichnung näher beschrieben.

Es zeigt:

Fig. 1 eine schematische Darstellung der Vorrichtung zum Auf-und Abrollen von schweren Lkw-Planen;

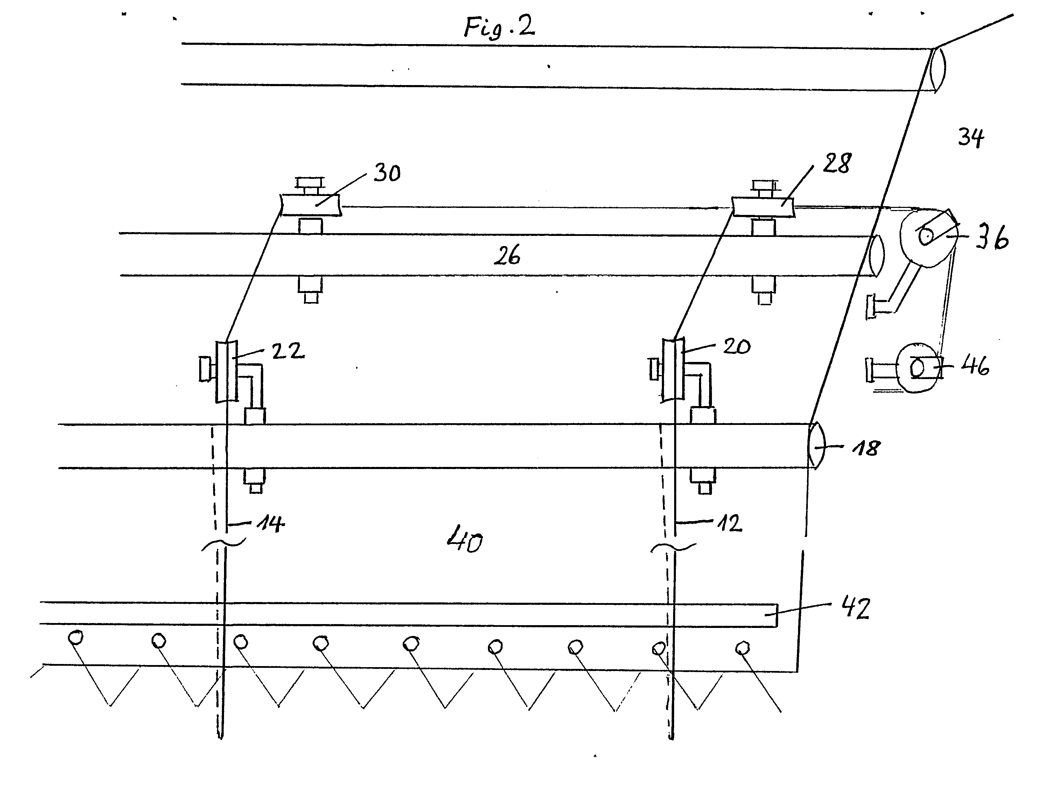

Fig. 2 eine schematische Darstellung der in Fig. 1 gezeigten Vorrichtung im Anschnitt und deutlicherer Darstellung der Rollen, sowie

Fig. 3 bis 6 Querschnittsansichten der eingesetzten Rollen.

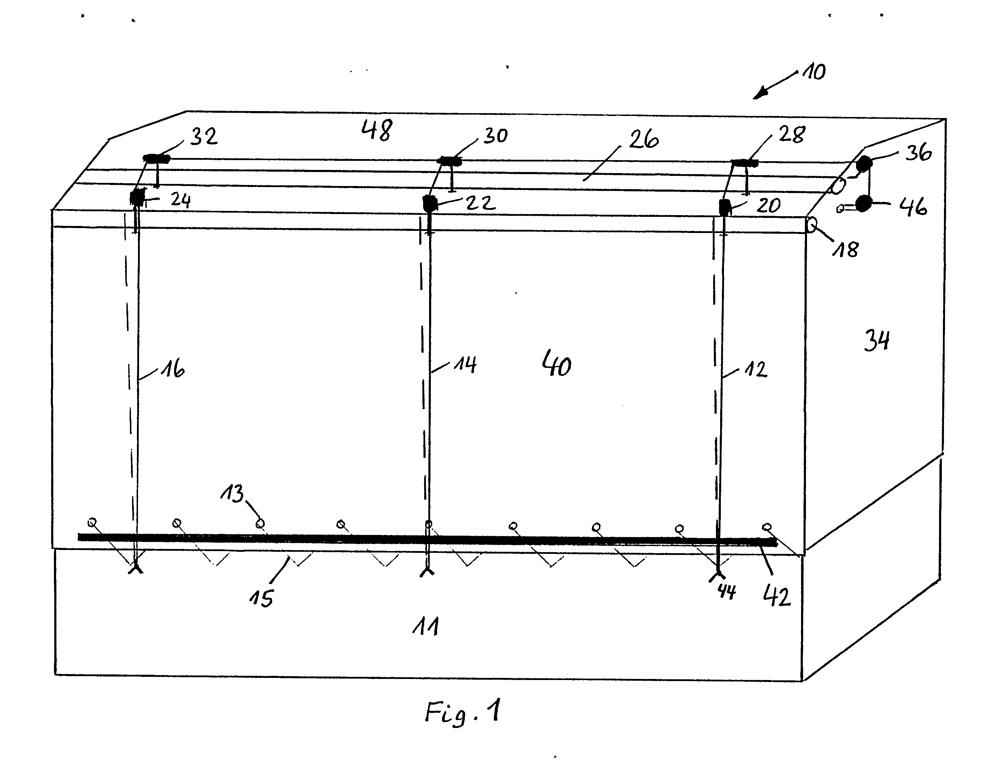

In Fig. 1 ist die Vorrichtung zum Auf-und Abrollen der Lkw-Planen 40 allgemein mit 10 bezeichnet. Die Figuren zeigen das Kraftfahrzeug selbst nicht, da dieses im wesentlichen von beliebiger Form und Größe sein kann. Die üblichen Lastkraftwagen und Anhänger, die mit Abdeckplanen überzogen sind, weisen im wesentlichen den gleichen kastenförmigen Aufbau 11 auf, dessen Ladefläche durch die Plane 40 abgedeckt ist. Die Plane 40, die aus Kunststoff oder einem anderen Mateial bestehen kann, weist üblicherweise an ihrem unteren Ende eine Vielzahl von Ösen 13 auf, durch die eine Befestigungsleine 15 verläuft. Die Erfindung sieht nun vor, an diesem unteren Ende der Plane 40 eine Stabilisierungsstange 42 vorzusehen, die in das umgeschlagene untere Ende der Plane 40 eingeschoben werden kann oder sonstwie dort befestigt ist. Im gezeigten, heruntergelassenen Zustand, läuft die Plane über das äußere bzw. obere Planenrohr 18 und die darüber aber weiter innen liegende Planenstange 26 hinweg und bildet dann das Dach 48 aus.

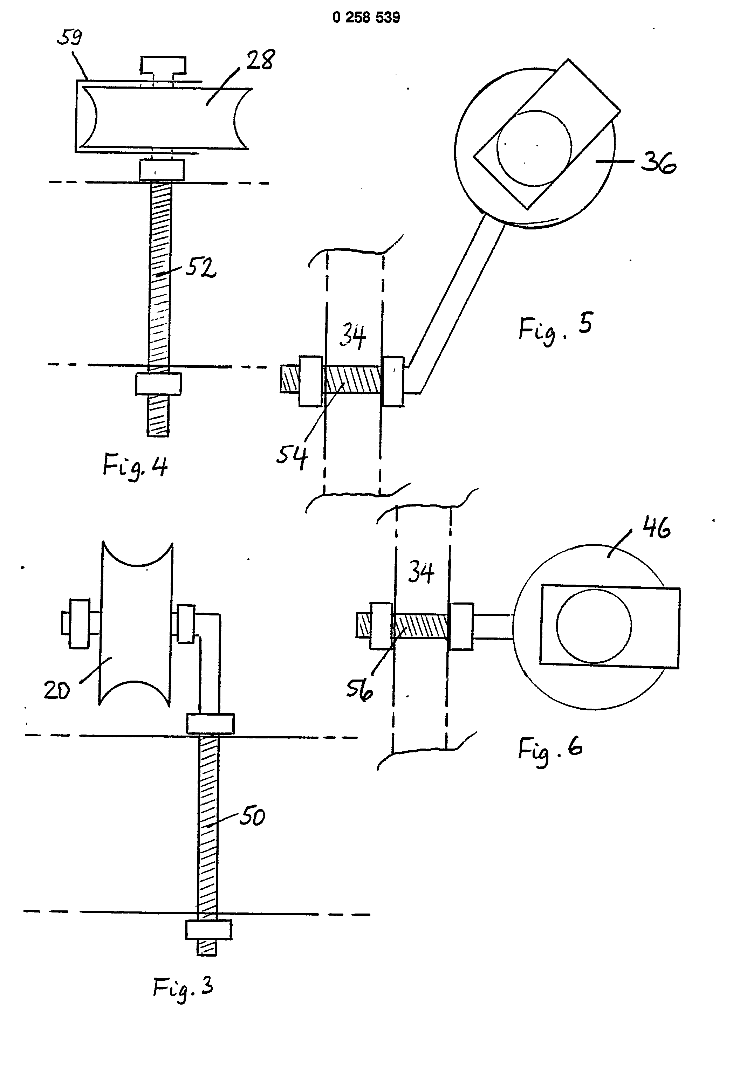

An der Befestigungsstange 18 sind beabstandet voneinander drei Führungsrollen 20, 22 und 24 vorgesehen. Die Form und Anzahl der Rollen ist nicht kritisch, sondern kann in geeigneter Weise abgeändert werden. Der Abstand zwischen ihnen beträgt ca. 1,9 m. Dieser kann jedoch in einem breiten Bereich verändert werden. Senkrecht darüberliegend, ggf. auch etwas versetzt, sind auf dem äußeren Planenrohr 26 entsprechende Umlenkrollen 28, 30 und 32 befestigt. Diese weisen jeweils eine Seilsicherung 59 auf, um zu verhindern, daß sie von der Rolle abspringen. Sowohl die Führungsrollen als auch die Umlenkrollen sind in Fig. 3 bzw. 4 im Querschnitt mit ihren Schraubbefestigungen 50 bzw. 52 gezeigt, wobei die Führungsrollen breiter und flacher sein können. Die Abringungsweise an den Rohren 18 bzw. 26 ist nicht besonders kritisch, so daß der Fachmann über entsprechende Möglichkeiten verfügt. Es ist eine Bohrung durch die Plane und das Planenrohr notwendig. Die Rollen selbst sind vorteilhafterweise aus Kunststoff und ermöglichen eine sichere Seilführung. Die einzelnen Seile 12,14 und 16 sind mit ihrem einen Ende jeweils am Befestigungsrohr 18 fixiert und verlaufen von dort hinter der Plane nach unten, um das untere Ende der Plane 40 lose geführt herum, und werden vor der Plane nach oben zur jeweiligen Führungsrolle 20, 22 und 24 geführt. Von dort laufen die Seile 12, 14 und 16 zu den entsprechenden Umlenkrollen 28, 30 bzw. 32 und werden durch diese dann in horizontaler Richtung zusammen zu einer zweiten Umlenkrolle 36 nach vorn geführt, die an der Stirnwand 34 des Aufbaus 11 festgeschraubt oder sonstwie befestigt ist. Es kann eine weitere Umlenkrolle 46 vorgesehen sein, die dann die Seile 12, 14 und 16 zusammen der Winde (nicht gezeigt) zuführen, die durch einen Elektromotor oder eine Handkurbel bedient werden kann. Für den Fall, daß ein Elektromotor (nicht gezeigt) vorgesehen ist, wird derselbe durch die Kraftfahrzeugbatterie gespeist und durch einen in günstiger Position angebrachten Schalter (nicht gezeigt) in Betrieb gesetzt. So kann der Schalter etwa in Mitte des Seitenaufbaus 11 untergebracht sein, damit der Fahrer das Aufrollen der Plane 40 durch leichtes Abziehen der Plane vom Aufbau besser kontrollieren kann.

Die Befestigung der Umlenkrollen 36 und 46 mittels Schraubverbindungen 54 und 56 an einer Stirnwand 34 bereitet dem Fachmann keine Probleme.

## Ansprüche

1. Vorrichtung zum Auf-und Abrollen von Planen mit mehreren in Zugrichtung verlaufenden Seilen und mindestens einem Befestigungsrohr für die Seile, sowie mit einer am unteren Ende der Plane befestigten Stabilisierungsstange, dadurch gekennzeichnet, daß zur Verwendung der Vorrichtung bei LKW-Planen jedes Seil (12,14 bzw.16) eine an einem äußeren Planenrohr (18) montierte Führungsrolle (20, 22 bzw. 24) und eine an einem darüberliegenden Planenrohr (26) montierte erste Umlenkrolle (28,30 bzw.32) mit Seilsicherung aufweist, die die Seile gemeinsam einer an der Stirnwand (34) des Fahrzeugs befestigten zweiten Umlenkrolle (36) zuführen, und daß eine gemeinsame Aufwickelvorrichtung für die Seile vorgesehen ist.

2. Vorrichtung nach Anspruch 1, dadurch gekennzeichnet, daß die Seile (12,14 und 16) in senkrechter Zugrichtung im Bereich von 1,5 bis 2,5 m voneinander beabstandet sind.

3. Vorrichtung nach Anspruch 1 oder 2, dadurch gekennzeichnet, daß die Aufwickelvorrichtung (38) eine elektrisch betätigte Winde umfaßt.

4. Vorrichtung nach Anspruch 3, dadurch gekennzeichnet, daß die Aufwickelvorrichtung (38) einen Elektromotor umfaßt, der von der Kraftfahrzeugbatterie gespeist wird.

5. Vorrichtung nach einem der Ansprüche 1 bis 4, dadurch gekennzeichnet, daß die Stabilisierungsstange (42) aus Holz, Metall oder Kunststoff besteht und in die Plane (40) eingeschoben ist.

6. Vorrichtung nach einem der vorstehenden Ansprüche, dadurch gekennzeichnet, daß die Seile (12,14 und 16) an ihrem untersten Umkehrpunkt an Haken (44) befestigt sind, die ihrerseits am Kraftfahrzeug montiert sind.

7. Vorrichtung nach einem der vorstehenden Ansprüche, dadurch gekennzeichnet, daß die Plane (40) als eine hintere oder eine seitliche Kunststoffplane mit einer Breite von 2 bis 15 m ausgebildet ist.

Fig.1

32  48  30  26  28  36

24  22  20  46

18

16  14  40  12  34

13

15  44  42

11

0 258 539

Fig.2

Fig. 4

Fig. 3

Fig. 5

Fig. 6